# EUROPEAN PATENT SPECIFICATION

(11) **EP 4 162 604 B1**
(45) Date of publication and mention of the grant of the patent: **29.10.2025**
(21) Application number: 21740271.8
(22) Date of filing: 28.05.2021
(51) Int. Cl.: H02S 20/32

(54) **MODULAR CONSTRUCTION OF SOLAR PANEL BATTERIES**
MODULARER AUFBAU VON SOLARZELLENBATTERIEN
CONSTRUCTION MODULAIRE DE BATTERIES DE PANNEAUX SOLAIRES

(30) Priority: 06.06.2020 PL 43422720
(43) Date of publication of application: 12.04.2023
(73) Proprietor: PROMET-PLAST S.C. Elzbieta Jezewska, Andrzej Jezewski, 55-200 Olawa (PL); Jezewski, Andrzej, 55-200 Olawa (PL)
(72) Inventor: JEZEWSKI, Andrzej, 55-200 Olawa (PL)
(74) Representative: Gornicki, Pawel
(86) International application number: PCT/PL2021/000032
(87) International publication number: WO 2021/246882

(56) References cited:
- WO-A1-2015/009507
- CA-A1- 3 074 411
- FR-A1- 2 461 332
- US-A1- 2010 101 559

## Description

The subject matter of the invention is a modular construction of solar panel batteries as well as an assembly of modules, intended for generating electricity and making it possible to cultivate agricultural land below said construction.

An assembly of photovoltaic panels according to the invention application under number P-430917. Said assembly is placed on a support structure, and is connected to a power grid. The photovoltaic panels are arranged in rows and the rows are spaced apart. The support structure with the photovoltaic panels is placed on supports at a height of at least 5m above ground level. The photovoltaic panels are situated diagonally in relation to ground level, and are fitted with gutters that are connected to a tank. The tank is fitted with a pump connected via pipes to a ground sprinkling system, and is side-supplied with fertilizers or plant protection products, whereas the support structure is fitted with wind turbines with a vertical axis of rotation. The tank is situated underground. The photovoltaic panels, wind turbines, pump, and fertilizer and plant protection product reservoirs are connected to a controller.

There are knows also modular construction of solar panel batteries presented in the patent specification number PL 215817. This construction consists of a support structure and rotary supports with a drive. At least one panel assembly is supported permanently on a structure that consists of at least one panel steering element fixed permanently to at least one vertical rotary axle installed in at least two bearings that are mounted in at least one upper support module and in at least one lower support module. They form a truss structure together with the at least two modules of vertical supports, the at least two modules of the horizontal link, the module of the front support, and the at least two modules of braces connected to each other by means of connecting elbows, three-way connecting pieces, four-way connecting pieces, and brace links. Laid on that structure there is at least one turner guide rail, on which there moves at least one roller.

Document US 2010/101559 A1 discloses a modular construction of solar panel batteries placed on a support structure and connected to a power grid, wherein the photovoltaic panels are arranged in rows and the rows are spaced apart, the photovoltaic panels are mounted on the support structure that is supported on a circular track via trucks.

The modular construction of solar panel batteries of the invention is placed on a support structure and is connected to a power grid, wherein the photovoltaic panels are arranged in rows and the rows are spaced apart. The modular construction is characterized in that, the double-sided photovoltaic panels are mounted on the support structure that is supported on a circular track via trucks. The track is mounted on a polygonal structure, which is placed on supports at a height of at least 5m above ground level. The support structure of the photovoltaic panels is supported on the track by means of trucks, of which two trucks - spaced at 180° - are fitted with a drive. Each driven truck is fitted with a drive motor with a transmission connected to a toothed wheel located under the truck and interlocked with a toothed strip that constitutes an element of the track. Each truck is fitted with rollers that rest on the track, side rollers that rest against the side of the track, and a safety strip situated under the track. The double-sided photovoltaic panels are mounted on the support structure at an acute angle to the horizontal plane ranging from 10 to 20°, and attached to them - at the lowest edge - there are gutters connected to a funnel located along the axis of the circular track, wherein the funnel is connected to a tank. Each driven motor is wirelessly connected to the controller, and the controller is fitted with a sun sensor.

The modular construction of solar panel batteries of the invention is characterized by a simple construction, but at the same time allows to use land intended for agricultural purposes to install solar panel batteries intended for electricity production. Furthermore, the construction of panel batteries for producing electricity is helpful for agricultural production because it can be used to supply water, fertilizers, and plant protection products to the plants. Another application of the assembly of photovoltaic panels is charging electric vehicles and thus using these vehicles to grow plants cultivated below the modular construction of batteries, which contributes to the ecology of plant cultivation. Installation of photovoltaic panels at a considerable height above the ground increases the yield of electricity by at least 75%. Arrangement of photovoltaic panels in rows spaced apart from each other does not hinder exposure of ground crops to sunlight. The use of double-sided photovoltaic panels makes it possible to take advantage of reflected light and thus increase the power of electricity obtained from the same surface area. The use of the controller for controlling the position of installed panels allows to better situate them in relation to the Sun, and thus to obtain the greatest power from the installed surface area of panels.

The construction of the module allows to create assemblies of modules, and on their construction it is possible to mount a wind turbine with a vertical axis of rotation. Such a turbine is particularly useful when the sky is heavily overcast and the power supplied by the panels decreases significantly. When this happens, the power supply is supported by the turbine. The power of the turbine can be adjusted by vertically increasing or decreasing the number of modules.

The modular construction of solar panel batteries of the invention is explained in more detail in the embodiment and in the drawing, where fig.1 presents a side view of the module of solar panel batteries, fig. shows an axonometric view of said module, fig.3 shows a detailed view of how the support structure of the panels is set on the truck, and how the truck is set on the track, fig.4 is a top view of the module of panels, fig.5 presents a cross-section of the elements of the connection of the truck with the track, fig.6 shows a side view of these elements, fig.7 and fig.8 present the connections of the gutters with the tank, fig.9 is a top view of the assembly of modules, and fig.10 presents two modules of the wind turbine.

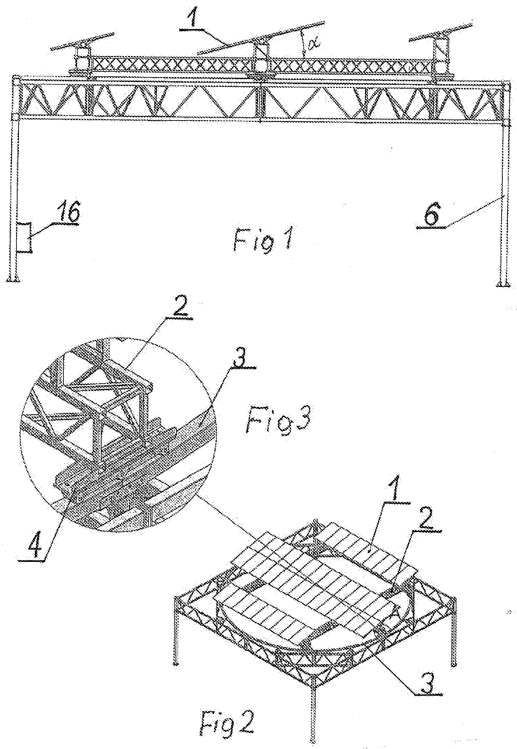

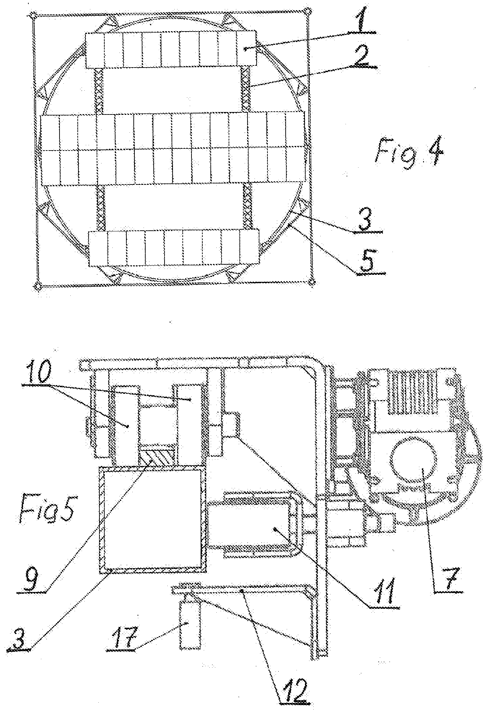

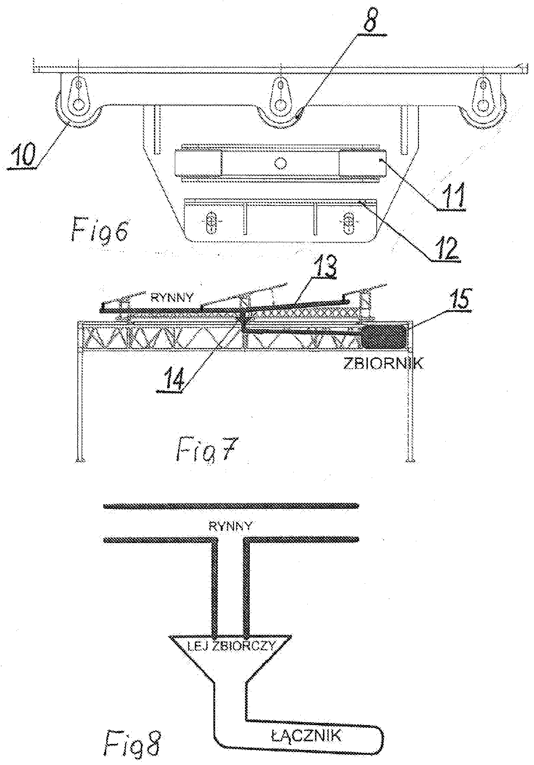

As shown in fig.1 to fig.8, the modular construction of solar panels batteries 1 is placed on the support structure 2 and connected to the power grid using a known method. The photovoltaic panels 1 are arranged in rows and the rows are spaced apart. The photovoltaic panels 1 are double-sided photovoltaic panels and are mounted on the support structure 2 in the form of a truss, which is supported on the circular track 3 via trucks 4, as shown in fig.2 and fig.3. The track 3 is mounted on the polygonal (in this case octagonal) structure 5, which is placed on supports 6 at a height of at least 5m above ground level. The support structure 2 of the photovoltaic panels 1 is supported on the track 3 by means of trucks 4, of which two trucks 4 - spaced at 180° - are fitted with a drive. Each driven truck 4 is fitted with a drive motor 7 locked to the transmission connected to the toothed wheel 8 located under the truck 4 and interlocked with the toothed strip 9 that constitutes an element of the track 3. Each truck 4 is fitted with rollers 10 that rest on the track 3, side rollers 11 that rest against the side of the track 3, and the safety strip 12 situated under the track 3, as shown in fig.5 and fig.6. The double-sided photovoltaic panels 1 are mounted on the support structure 2 at the 15° acute angle a to the horizontal plane. At the lowest edge of the panels, there are gutters 13 which, in turn, are connected to the funnel 14 located along the axis of the circular track 3. The funnel 14 is connected to the tank 15 situated in the construction. It is obvious that the tank 15 may also be situated elsewhere, also underground. Each drive motor 7 is wirelessly connected to the controller 16, and the controller 16 is fitted with a sun sensor and is also connected to other sensors such as the sensor 17 that signals when the support structure 2 is being picked up by the wind. Furthermore, the module is fitted with a water system connected to the tank 15 that sprinkles the crops below the module. At the same time, the water system may be connected to a fertilizer tank and to a plant protection product tank.

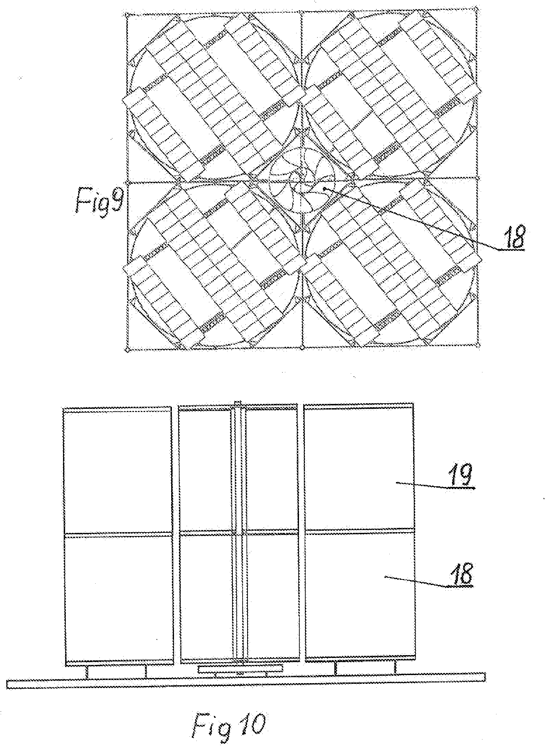

The assembly of modules of photovoltaic panel batteries shown from the top in fig.9 comprises four modules situated side by side and connected to each other. Said assembly is fitted with the vertical-axis wind turbine 18, the construction of which allows another turbine 19 to be added from above, sharing its axis, in order to increase its power, as shown in fig.10.

The modular construction of solar panel batteries works as follows. The double-sided photovoltaic panels 1 mounted on the support structure 2 supported on the track 3 via trucks 4 are able to rotate so as to follow the movement of the Sun. The sun sensor located in the controller 16 sends a signal to the controller 16, which, in turn, wirelessly sends a signal to the motor 7 located at the truck 4. The motor 7 drives the toothed wheel 8 interlocked with the toothed strip 9, thanks to which the double-sided photovoltaic panels 1 rotate so as to be positioned perpendicular to sunlight. This positioning allows the best use of solar energy, to convert it into electricity. Not only does the placement of the double-sided photovoltaic panels 1 allow to take advantage of direct exposure to sunlight, but it also makes use of reflected light. Due to the fact that the double-sided photovoltaic panels are located at a considerable height and have a large surface area, they are at risk of being damaged by strong wind. With this in mind, the trucks 4 are fitted with the safety strip 12 together with the sensor 17. In the event that the entire assembly of double-sided photovoltaic panels 1 is being lifted upwards by strong wind, the strip 12 rests on the track 3, and the sensor 17 sends a signal to the controller 16, which sends a relevant signal to the motor 7 to change the position of the entire assembly of double-sided photovoltaic panels 1 to one that is more favourable considering the wind direction. What is more, the construction of the modular construction allows rainfall to be utilized by collecting water in the tank 15 through the corresponding system of gutters 13. Said water can be used in known ways for both sprinkling the crops and distributing relevant plant protection products or fertilizers. The electricity produced can be used, in known ways, to power equipment that is necessary for cultivation of land.

## Claims

1. A modular construction of solar panel batteries placed on a support structure and connected to a power grid, wherein the photovoltaic panels are arranged in rows and the rows are spaced apart, **characterized in that**, the double-sided photovoltaic panels (1) are mounted on the support structure (2) that is supported on a circular track (3) via trucks (4), and the track (3) is mounted on a polygonal structure (5), which is placed on supports (6) at a height of at least 5m above ground level.

2. The modular construction according to claim 1, **characterized in that**, the support structure (2) of the photovoltaic panels (1) is supported on the track (3) by means of trucks (4), of which two trucks (4) - spaced at 180° - are fitted with a drive.

3. The modular construction according to claim 2, **characterized in that**, each driven truck (4) is fitted with a drive motor (7) with a transmission connected to a toothed wheel (8) located under the truck (4) and interlocked with a toothed strip (9) that constitutes an element of the track (3).

4. The modular construction according to claim 2, **characterized in that**, each truck (4) is fitted with rollers (10) that rest on the track (3), side rollers (11) that rest against the side of the track (3), and a safety strip (12) situated under the track (3).

5. The modular construction according to claim 1, **characterized in that**, the double-sided photovoltaic panels (1) are mounted on the support structure (2) at an acute angle (a) to the horizontal plane ranging from 10 to 20°, and attached to them - at the lowest edge - there are gutters (13) connected to a funnel (14) located along the axis of the circular track (3), wherein the funnel (14) is connected to a tank (15).

6. The modular construction according to claim 3, **characterized in that**, each driven motor (7) is wirelessly connected to the controller (16), and the controller (16) is fitted with a sun sensor.

## Patentansprüche

1. Ein modularer Aufbau von Solarzellenbatterien, die auf einer Tragkonstruktion platziert und an ein Stromnetz angeschlossen sind, wobei die Photovoltaikmodule in Reihen angeordnet sind und die Reihen voneinander beabstandet sind, **dadurch gekennzeichnet, dass** die doppelseitigen Photovoltaikmodule (1) auf der Tragkonstruktion (2) montiert sind, die auf einr kreisförmigen Schiene (3) über Laufwagen (4) getragen wird, und die Schiene (3) auf einer polygonalen Struktur (5) montiert ist, die sich auf Stützen (6) in einer Höhe von mindestens 5 m über dem Boden befindet.

2. Der modulare Aufbau gemäß Anspruch 1, **dadurch gekennzeichnet, dass** die Tragkonstruktion (2) der Photovoltaikmodule (1) auf der Schiene (3) mittels Laufwagen (4) abgestützt ist, von denen zwei Laufwagen (4) - in einem Winkel von 180° angeordnet - mit einem Antrieb ausgestattet sind.

3. Der modulare Aufbau gemäß Anspruch 2, **dadurch gekennzeichnet, dass** jeder angetriebene Laufwagen (4) mit einem Antriebsmotor (7) mit einem Getriebe ausgestattet ist, das mit einem Zahnrad (8) verbunden ist, das sich unter dem Laufwagen (4) befindet und mit einer Zahnleiste (9) verbunden ist, die ein Element der Schiene (3) darstellt.

4. Der modulare Aufbau gemäß Anspruch 2, **dadurch gekennzeichnet, dass** jeder Laufwagen (4) mit Rollen (10), die auf der Schiene (3) aufliegen, Seitenrollen (11), die an der Seite der Schiene (3) anliegen, und einer Sicherheitsleiste (12), die sich unter der Schiene (3) befindet, ausgestattet ist.

5. Der modulare Aufbau gemäß Anspruch 1, **dadurch gekennzeichnet, dass** die doppelseitigen Photovoltaikmodule (1) auf der Tragkonstruktion (2) in einem spitzen Winkel (a) zur horizontalen Ebene, der zwischen 10 und 20° liegt, montiert sind und an ihrem untersten Rand mit Rinnen (13) verbunden sind, die mit einem Trichter (14) verbunden sind, der sich entlang der Achse der kreisförmigen Schiene (3) befindet, wobei der Trichter (14) mit einem Tank (15) verbunden ist.

6. Der modulare Aufbau gemäß Anspruch 3, **dadurch gekennzeichnet, dass** jeder angetriebene Motor (7) drahtlos mit der Steuerung (16) verbunden ist und die Steuerung (16) mit einem Sonnensensor ausgestattet ist.

## Revendications

1. Construction modulaire de batteries de panneaux solaires placée sur une structure de support et connectée à un réseau électrique, où les panneaux photovoltaïques sont disposés dans des rangées et où les rangées sont espacées, **caractérisé en ce que** les panneaux photovoltaïques double face (1) sont montés sur la structure de support (2) qui est soutenue sur un rail circulaire (3) à l'aide de chariots (4), et que le rail (3) est monté sur une structure polygonale (5) qui est placée sur des supports (6) à une hauteur d'au moins 5m au-dessus du niveau du sol.

2. La construction modulaire conforme à la revendication 1, **caractérisé en ce que** la structure de support (2) des panneaux photovoltaïques (1) sont soutenus sur un rail (3) par le moyen de chariots (4), dont deux chariots (4) - espacés à 180° - sont équipés d'un entrainement.

3. La construction modulaire conforme à la revendication 2, **caractérisé en ce que** chaque chariot entrainé (4) est équipé d'un moteur d'entrainement (7) avec une transmission reliée à une roue dentée (8) située sous le chariot (4) et s'emboîtant dans une bande dentée (9) qui constitue un éléments du rail (3).

4. La construction modulaire conforme à la revendication 2, **caractérisé en ce que** chaque chariot (4) est équipé de roulettes (10) qui reposent sur le rail (3), de roulettes latérales (11) qui s'appuient contre le côté du rail (3), et d'une bande de sécurité (12) située sous le rail (3).

5. La construction modulaire conforme à la revendication 1, **caractérisé en ce que** les panneaux photovoltaïques (1) sont montés sur la structure de support (2) sous un angle aigu (a) par rapport au plan horizontal, allant de 10 à 20°, et y attachés - au bord le plus bas - il y a des rigoles (13) reliées à un entonnoir (14) situés le long des axes du rail circulaire (3), où l'entonnoir (14) est relié à un réservoir (15).

6. La construction modulaire conforme à la revendication 3, **caractérisé en ce que** chaque moteur entrainé (7) est connecté sans fil à la commande (16), et que la commande (16) est équipée d'un capteur solaire.
